(19) Europäisches Patentamt
European Patent Office
Office européen des brevets

(11) EP 2 385 220 A2

(12) EUROPÄISCHE PATENTANMELDUNG

(43) Veröffentlichungstag:
09.11.2011 Patentblatt 2011/45

(51) Int Cl.:
F01D 11/02 (2006.01)       F01D 25/18 (2006.01)
F02C 7/28 (2006.01)        F16J 15/447 (2006.01)

(21) Anmeldenummer: 11161306.3

(22) Anmeldetag: 06.04.2011

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(30) Priorität: 07.05.2010 DE 102010028732

(71) Anmelder: MAN Diesel & Turbo SE
86153 Augsburg (DE)

(72) Erfinder: Raible, Tilmann, Dr.
46045 Oberhausen (DE)

(54) Labyrinthdichtung für eine Turbomaschine

(57) Labyrinthdichtung für eine Turbomaschine, aufweisend: eine Mehrzahl von länglichen Dichtungslamellen (11, 21), die entlang einer Längsrichtung (LR) der Labyrinthdichtung nebeneinander und mit Abstand voneimander angeordnet sind, so dass zwischen benachbarten Dichtungslamellen jeweils eine Kammer (30) gebildet ist, wobei die Dichtungslamellen jeweils ein freies Ende (12, 22) aufweisen, und wenigstens eine sich in Längsrichtung der Labyrinthdichtung erstreckende Dichtungswand (10, 20), wobei zwischen jedem freien Ende und der Dichtufigswand ein Dichtungspalt (S) gebildet ist, über den benachbarte Kammern (30) miteinander fluidverbunden sind, so dass ein der Labyrinthdichtung beaufschlagtes Arbeitsfluid in einer Drosselungsrichtung (DR) ausgehend von einer ersten Dichtungslamelle bis zu einer letzten Dichtungslamelle gedrosselt durch die Labyrinthdichtung strömen kann, dadurch gekennzeichnet, dass eine Fluidabführeinrichtung (40, 50) vorgesehen ist, die eingerichtet ist, mittels aus der Labyrinthdichtung heraus Abführens von Arbeitsfluid entlang der Drosselungsrichtung eine kontinuierliche Absenkung einer spezifischen Enthalpie (h) des Arbeitsfluids zu bewirken

Fig. 2

Printed by Jouve, 75001 PARIS (FR)

**Beschreibung**

Die Erfindung betrifft eine gemäß dem Oberbegriff von Anspruch 1 ausgestaltete Labyrinthdichtung für eine Turbomaschine

Eine Labyrinthdichtung der eingangsgenannten Art ist beispielsweise in der Einleitung der Bachelorarbeit von D. Strongilis zum Thema "Überbrückungseffekt (Carry-Over Effekt) bei Durchblicklabyrinthdichtungen" beschneben, welche im Januar 2010 bei der Fakultät für Maschinenwesen und Betriebswissenschaften der Technischen Universität Wien eingereicht wurde.

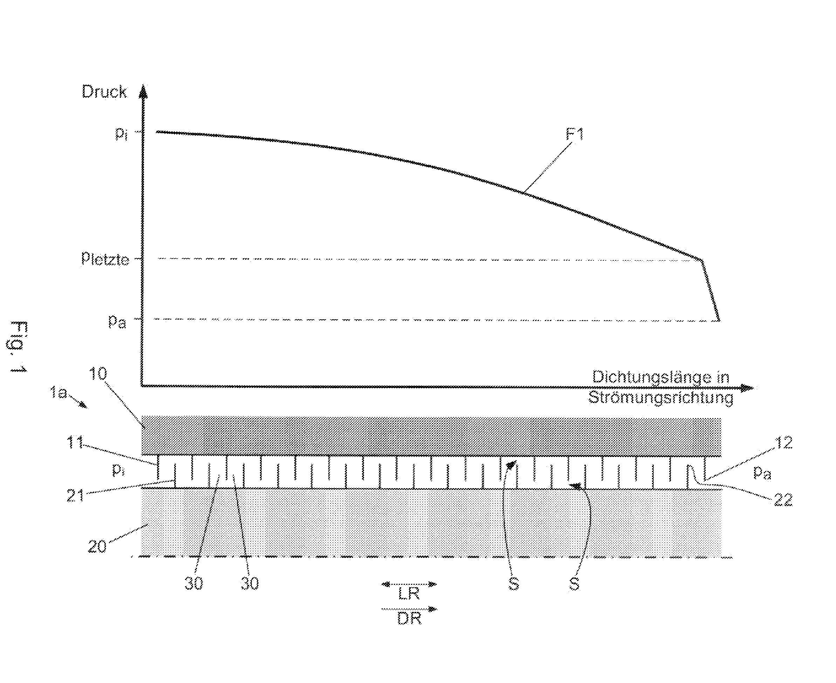

in Fig 1 ist eine in dieser Bachelorarbeit in Abbildung 1.2 auch als Voillabyrinth bezeichnete Labyrinthdichtung 1a dargestellt. Die Labyrinthdichtung 1a weist eine Zu einem Stator der Turbomaschine gehörende erste Dichtungswand 10 sowie eine zu einem Rotor der Turbomaschine gehörende zweite Dichtungswand 20 auf die sich jeweils in einer Längsrichtung LR der Labyrinthdichtung 1a erstrecken

An der ersten und der zweiten Dichtungswand 10, 20 sind eine Mehrzahl von länglichen Dichttingslamellen 11, 21 vorgesehen, die entlang der Längsrichtung LR der Labyrinthdichtung 1a längsseits parallel nebeneinander und jeweils mit Abstand voneinander angeordnet sind, so dass zwischen benachbarten Dichtungslamellen 11, 21 jeweils eine Kammer 30 gebildet ist.

Die Dichtungslamellen 11, 21 weisen jeweils ein freies Ende 12, 22 auf, wobei zwischen jedem freien Ende 12, 22 der Dichtungslamellen 11, 21 und der jeweils gegenüberliegenden Dichtungswand 10 bzw, 20 ein Dichtungspalt S gebildet ist über den benachbarte Kammem 30 der zwischen den Dichtungslamellen 11, 21 gebildeten Kammem 30 miteinander fluidverbunden sind, so dass ein der Labyritbdichtung 1a beaufschlagtes Arbeitsfluid der Turbomaschine in einer Drosselungsrichtung DR, welche der in Fig 1 gezeigten Strömungsrichtung entspricht, ausgehend von einer ersten Dichtungslamelle (der in Fig.1 ganz linken Dichtungslamelle 11) bis zu einer letzten Dichtungslamelle (der in Fig. 1 ganz rechten Dictungslamelle 11) gedrosselt durch die Labyrinthdichtung 1a hindurchströmen kann

Turbomaschinen wie Gegendruckturbinen und Kondensationsturbinen, welche in einem Hochdruckteil dieser hohe Eingangsparameter (z.B einen hohen Druck) aufweisen, benötigen ausgeprägte Labyrinth-Dichtungssysteme, um sie abzudichten

In Turbomaschinen installierte überkritische Labyrinthdichtungen (mit Überschall-Ausströmung an einer in Drosselungsrichtung der Labyrinthdichtung letzten Dichtungslamelle bzw. Dichtungsspize) haben einen prinzipbedingten Belastungsverlauf, wobei die letzte Dichtungslamelle bedingt durch das dort anliegende Überkritisches Druckverhältnis im Vergleich zu davorliegenden Dichtungslamellen wesentlich höher belastet ist. Außerdem werden zum Abbau eines hohen Gesamtdruckverhaltnisses eine große Anzahl von Dichtungslamellen benötigt,

Die Drosselung des Drucks über eine Labyrinthdichtung wird Üblicherweise durch eine sogenannte Fanno-Kurve" beschrieben. Das Charakteristikum dieser Kurve ist ein relativ flacher Verlauf am Beginn der Labynnthdichtung, wobei die letzte Drosselstelle (letzte Dichtungslamelle) wie erwähnt immer am höchsten belastet ist, was ursächlich an der als konstant angenommenen spezifischen Enthalpie des expandierenden Gases (durch die Labyrinthdichtung strömendes Arbeitsfluid) liegt

ln Fig. 1 ist der schematische Verlauf einer Expansion gemäß einer Fanno-Kurve F1 mit einem Überkritischen DrucKverhältnis an der letzten Stufe (bzw kurz nach der letzten Dichtungslamelle 11) der Labyrinthdichtung 1a gezeigt. wobei p ein Eingangsdruck des Arbeitsfluids, $p_{letzte}$ ein Druck des Arbeitsfluids an der letzten Stufe der Labyrinthdichtung 1a und $p_a$ ein Druck des Arbeitsfluids nach der letzten Stufe der Labyrinthdichtung 1a bzw einAusgangsdruck des Arbeitsfluids ist.

Hinsichtlich Details zur Ausbildung eines überkritischen Druckverhältnisses an der letzten Stufe einer Labyrinthdichtung wird z B auf die Abschnitle 2. 3 und 2.4 der o.g Bachelorarbeit von D. Strongilis verwiesen

Um ein hohes Gesamtdruckverhältnis in einfacher abzubauende Stufen zu unterteilen, werden gemäß dem Stand der Technik sogenannte Zwischenabsaugungen eingesetzt, wie z.B in DE 26 35 918 B1 beschrieben. Für die zuverlässige Funktion von Zwischenabsaugungen muss allerdings das jeweilige Druckniveau entsprechend zuverlässig vorgehalten werden, was entsprechenden Regel- und Kontrollaufwand verursacht. Außerdem bauen Turbomaschinen mit Zwischenabsaugung länger.

Der Erfindung liegt die Aufgabe zugrunde, eine Labyrinthdichtung für eine Turbomaschine bereitzustellen welche mit einer bei gleichem Gesamtdruckverhältnis gegenüber dem Stand der Technik reduzierten Anzahl und gleichmäßiger belasteten Dichtungslamellen bzw. Dichtungsspitzen auskommt.

Dies wird mit einer Labyrinthdichtung gemäß Anspruch 1 erreicht Weiterbildungen der Erfindung sind in den abhängigen Ansprüchen definiert.

Gemäß der Erfindung weist eine Labyrinthdichtung für eine Turbomaschine eine Mehrzahl von länglichen Dichtungslamellen, die entlang einer Längsrichtung der

Labyrinthdichtung längsseits nebeneinander und Jeweils mit Abstand voneinander angeordnet sind, so dass zwischen benachbarten Dichtungslamellen jeweils eine Kammer gebildet ist, wobei die Dichtungslamellen jeweils ein freies Ende aufweisen, und wenigstens eine sich in Längsrichtung der Labyrinthdichtung erstreckende Dichtungswand auf, wobei zwischen jedem freien Ende der Dichtungslamellen und der wenigstens einen Dichtungswand ein Dichtungspalt gebildet ist, über den benachbarte Kammern der zwischen den Dichtungslamellen gebildeten Kammern miteinander fluidverbunden sind, so dass ein der Labyrinthdichtung beaufschlagtes Arbeitsfluid der Turbomaschine in einer Drosselungsrichtung ausgehend von einer ersten Dichtungslarmelle bis zu einer letzten Dichtungslamelle gedrosselt durch die Labyrinthdichtung hindurchströmen kann. Die erfindungsgemäße Labyrinthdichtung zeichnet sich dadurch aus, dass eine Fluidabführeinrichtung vorgesehen ist, die eingerichtet ist, mittels aus der Labyrinthdichtung heraus Abführens von Arbeitsfluid entlang der Drosselungsrichtung eine kontinuierliche Absenkung einer spezifischen Enthalpie des Arbeitsfluids zu bewirken.

Durch die kontinuierliche Absenkung der spezifischen Enthalpie des Arbeitsfluids entlang der Drosselungsrichtung lässt sich bei gleichem Gesamtdruckverhältnis eine gegenüber dem Stand der Technik steilere Drosselkurve (Fanno-Kurve) und damit eine reduzierte Anzahl und gleichrnäßiger belastete Dichtungslamellen erzielen.

Das erfindungsgemäße Dichtungskonzept eignet sich z.B für Turbomaschinen. die nicht auf möglichst hohen Wirkungsgrad optimiert sind und somit auch mit einem erhöhten Verlustmassenstrom über die Labyrinthdichtung konkurrenzfähig bleiben, Der Wegfall der Zwichenabsaugungen und der damit zusammenhängenden Systeme sowie die kürzere Ausführung der Labyrinthdichtung bringt in jedem Fall einen erheblichen Kosten- und damit Wettbewerbsvorteil

Gemäß einerAusführungsform der Erfidung ist die Fluidabführeinrichtung eingerichtet das Arbeitsfluid aus zumindest einem Teil der Kammern abzuführen, um die kontinuierliche Absenkung der spezifischen Enthalpie des Arbeitsfluids zu bewirken.

Durch das Abführen von Arbeitsfluid aus einem Teil der Kammern oder auch aus allen Kammern kann auf einfache und sichere Weise die gewünschte kontinuierliche Absenkung der spezifischen Einthalpie des Arbeitsfluids bewirkt werden.

Je nach den dichtungsspezifischien thermodynamischen Gegebenheiten kann damit die Steilheit der zu erzielenden Drosselkurve (Fanno-Kurve) beeinflusst werden. Bevorzugt ist die Fluidabführeinrichtung z.B eingerichtet, das Arbeitsfluid entlang der Drossalungsrichtung aus jeder zweiten Kammer abzuführen, um die kontinuierliche Absenkung der spezifischen Enthalpie des Arbeitsfluids zu bewirken,

Gemäß noch einer Ausführungsform der Erfindung ist die Fluidabführeinrichtung eingerichtet, entlang der Drosselungsrichtung eine Mehrzahl spezifischer, d.h separat einstellbarer, Massenströme von Arbeitsfluid abzuführen, um die kontinuierliche Absenkung der spezifischen Enthalpie des Arbeitsfluids zu bewirken

Auf diese Weise kann die Absenkung der spezifischen Enthalpie des Arbeitsfluids noch besser gesteuert bzw ggf. geregelt werden

Gemäβ noch einer weiteren Ausführungsform der Erfindung ist die Fluidabführeinrichtung eingerichtet, als spezifische Massenströme zumindest teilweise unterschiedliche Massenströme von Arbeitsfluid abzuführen, um die kontinuierliche Absenkung der spezifischen Enthalpie des Arbeitsfluids zu bewirken.

Gemäß den dichtungsspezifischen thermodynamischen Gegebenheiten kann es z.B notwendig sein in einem bestimmten Längsabschnitt der Labyrinthdichtung mehrArbeitsfluid abzuführen und in einem weiteren Längsabschnitt der Labyrinthdichtung weniger Arbeitsfluid abzuführen, um einen bestimmten gewünschten oder idealen Verlauf der Drosselkurve (Fanno..Kurve) zu erzielen Dies ist durch die erfindungsgemäß bereitgestellte Möglichkeit, zumindest teilweise unterschiedliche Massenströme von Arbeitsfluid abzuführen, realisiert

Gemäß einer weiteren Ausführungsform der Erfindung ist die Fluidabführeinrichtung eingerichtet das Arbeitsfluid aus der Labyrinthdichtung genen einen Umgebungsdruck, d.h. gegen atmosphärischen Druck, abzuführen.

Auf diese Weise kann auf eine kostenintensive Druckregelung verzichtet werden Dies bewirkt zwar einen etwas größeren Verlustmassenstrom durch die Labyrinthdichtung hindurch, bringt jedoch durch den Wegfall der kostenintensiven Druckregelung einen beträchtlichen Kostenvorteil und damit Wettbewerbsvorteil.

Gemäß einer Ausführungsform der Erfindung weist die Labyrinthdichtung eine Zwischenabführeinrichtung auf, die eingerichtet ist, zwischen der ersten Dichtungslamelle und der letzten Dichtungslamelle Arbeitsfluid aus der Labyrinthdichtung heraus gegen einen vorbestimmten gegenüber einem Umgebungsdruck erhöhten Druck abzuführen, wobei die Fluidabführeinrichtung eine erste Fluidabführeinheit, die eingerichtet ist, in einem ersten Längsabschnitt der Labyrinthdichtung das Arbeitsfluid gegen den vorbestimmten gegenüber dem Umgebungsdruck erhöhten Druck aus der Labyrinthdichtung heraus abzuführen, um eine erste kontiuierliche Absenkung der spezifischen Enthalpie des Arbeitsfelds zu bewirken, und eine zweite Fluidabführeinheit aufweist, die eingerichtet ist, in einem zweiten Längsabschnitt der Labyrinthdichtung das Arbeitsfluid aus der Labyrinthdichtung gegen den Umgebungsdruck abzuführen um eine zweite kontinuierliche Absenkung der spezifischen Enthalpie des Arbeitsfluids zu bewirken.

Diese Ausgestaltung der Erfindung eignet sich insbesondere für höher performante Turbomaschinen, da hier dadurch, dass die kontinuierliche Abführung von Arbeitsfluid zur kontinuierlichen Absenkung der spezifischen Enthalpie des Arbeitsfluids gegen den gegenüber dem Umgebungsdruck erhöhten Druck, welcher bevorzugt auf einem gegenüber einem Eingangsdruck in die Labyrinthdichtung reduzierten mittleren Druckniveau liegt erfolgt, ein geringerer Verlustmassenstrom über die Labyrinthdichtung entsteht.

Bevorzugt ist die erste Fluidabführeinheit entlang der Drosselungsrichtung der Zwischenabführeinrichtung vorgelagert. Ferner ist bevorzugt die erste Fluidabführeinheit entlang der Drosseluffgsrichtung der zweiten Flüidabführeinheit vorgelagert. Außerdem ist bevorzugt die Zwschenabführeinrichtung eingerichtet das Arbeitsfluid zwischen der ersten Fluidabfüheinheit und der zweiten Fluidabführeinheit aus der Labyrinthdichtung abzuführen.

Damit kann die kontinuierliche Abführung von Arbeitsfluid zur kontinuierlichen Absenkung der spezifischen Enthalpie des Arbeitsfiuids in idealer Weise gestuft gegen ein mittleres Druckniveau (erste Fluidabführeinheit) und optional gegen den Umgebungsdruck (zweite Fluidabführeinheit) arbeiten, womit einerseits der Vorteil eines geringerer Verlustmassenstroms Über die Labyrinthdichtung und andererseits auch der Vorteil einer geringeren Anzahl und gleichmäßiger belasteter Dichtungslamellen erzielt wird

Im Folgenden wird die Erfindung anhand bevorzugter Ausführungsformen und unter Bezugnahme auf die beigefügten Figuren detaillierter beschrieben.

Fig.1    zeigt eine Fanno-Kurve einer Labyrinthdichtung gemäß dem Stand der Technik mit kritischer letzter Dichtungsstufe

Fig,2    zeigt eine Fanno-Kurve einer Labyrinthdichtung gemäß einer Ausführungsform der Erfindung

Fig 3    zeigt eine Fanno-Kurve einer Labyrinthdichtung gemäß einer weiteren Ausführungsform der Erfindung.

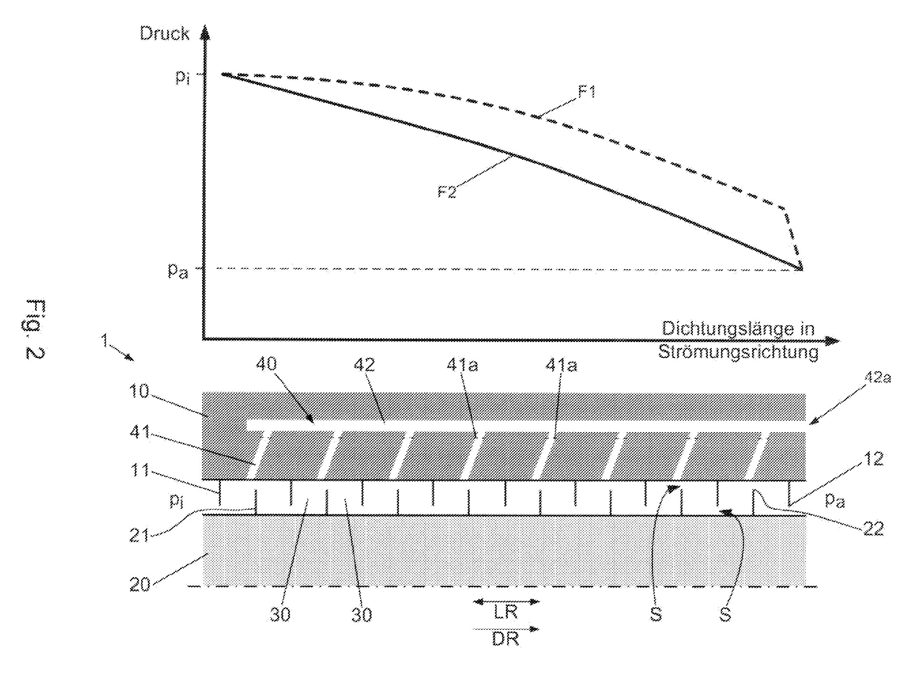

Fig.2 zeigt im oberen Bereich eine Fanno-Kurve F2 einer in Fig 2 im unteren Bereich dargestellten Labyrinthdichtung 1 einer Turbomaschine (nicht vollständig gezeigt) gemäß einer Ausführungsform der Erfindung. Zum Vergleich ist in Fig 2 im oberen Bereich außerdem die Fanno-Kurve F1 von Fig 1 gestrichelt dargestellt

In Fig.2 symbolisieren analog zu Fig.1 $p_i$ den Eingangsdruck des Arbeitsfluids in die Labyrinthdichtung 1 und $p_a$ den Druck des Arbeitsfluids nach der letzten Stufe der Labyrinthdichtung 1 bzw. den Ausgangsdruck des Arbeitsfluids

Wie aus Fig.2 ersichtlich, weist die zu der erfindungsgemäßen Labyrinthdichtung 1 gehörende Fanno-Kurve F2 gegenüber der zu der labynnthdichtung 1a aus dem Stand der Technik gehörenden gestrichelt dargestellten Fanno-Kurve F1 einen steileren und außerdem gleichmäßigeren Verlauf ohne Drucksprung bzw Druckstufung an der letzten Stufe der erfindungsgemäßen labyrinthdichtung 1 auf

Die erfindungsgemäße Labyrinthdichtung 1 weist eine zu einem Stator der Turbomaschine gehörende erste Dichtungswand 10 sowie eine zu einem Rotor der Turbomaschine gehörende zweite Dichtungswand 20 auf, die sich jeweils in einer Längsrichtung LR der Labyrinthdichtung 1 erstrecken

An der ersten und der zweiten Dichtungswand 10, 20 sind eine Mehrzahl von länglichen Dichtungslamellen 11, 21 vorgesehen, die entlang der Längsrichtung LR der Labyrinthdichtung 1 sangsseits parallel nebeneinander und jeweils mit Abstand voneinander angeordnet sind, so dass zwischen benachbarten Dichtungslamellen 11, 21 jeweils eine Kammer 30 gebildet ist

Die Dichtungslaniellen 11, 21 weisen Jeweils ein freies Ende 12, 22 auf, wobei zwischen jedem freien Ende 12, 22 der Dichtungslamellen 11, 21 und der jeweils gegenüberliegenden Dichtungswand 10 bzw 20 ein Dichtungspalt S gebildet ist, über den benachbarte Kammern 30 der zwischen den Dichtungslamellen 11, 21 gebildeten Kammern 30 miteinander fluidverbunden sind. so dass ein der labyrinthdichtung 1 beaufschlagtes Arbeitsfluid der Turbomaschine in einer Drosselungsrichtung DR. welche der in Fig 2 gezeigten Strömungsrichtung entspricht ausgehend von einer ersten Dichtungslamelle (der in Fig.2 ganz linken Dichtungsslamelle 11) bis zu einer letzten Dichtungslamelle (der in Fig. 2 ganz rechten Dichtungslamelle 11) gedrosselt durch die labyrinthdichtung 1 hindurchströmen kann.

Im Sinne der Erfindung ist mit Dichtungswand eine Wand gemeint, die mit einem freien Ende 12. 22 der Dichtungslamellen 11, 21 einen Dichtungspalt S bildet. Demnach weist die gezeigte Labyrinthdichtung 1 zwei Dichtungswände 10, 20 auf. Andererseits könnte gemäß einer nicht dargestellten Ausführungsform der Erfindung eine Labyrinthdichtung, welche wie in Abbildung 1 1 der eingangsgenannten Bachelorarbeit als Durchblicklabyrinth ausgebildet ist, auch nur eine einzige Dichtungswand (die z B zum Stator der Turbomaschine gehört) aufweisen, wobei sich die Dichtungslamellen von einer Basiswand (die z.B zum Rotor der Turbomaschine gehört) erstrecken.

Demgemäß bildet bei der gezeigten Ausführungsform der erfindungsgemäßen Labyrinthdichtung 1 jede der beiden Dichtungswände 10, 20 gleichzeitig eine Basiswand, von der sich die Dichtungslamellen 11 bzw. 21 erstrecken.

Die erfindungsgemäßeLabyrinthdichtung 1 weist ferner eine Fluidabführeinrichtung40 auf, die eingerichtet ist, mittels aus der Labyrinthdichtung 1 heraus Abführens von Arbeitsfluid entlang der Drosselungsrichtung DR eine kontinuierliche Absenkung einer spezifischen Enthalpie h des Arbeitsfluids zu bewirken.

Die Enthalpie H beschreibt die Energie eines thermodynamischen Systems. Die Enthalpie H ist als Summe aus der inneren Energie U und der Volumenarbeit pV definiert:

$$H = U + pV \qquad\qquad\qquad (1)$$

Die innere Energie U besteht aus der thermischen Energie, beruhend auf der ungerichteten Bewegung der Moleküle (kinetische Energie, Rotationsenergie, Schwingungsenergie), der chemischen Bindungsenergie und der potentiellen Energie der Atomkerne.

Die spezifische Enthalpie h beschreibt die Enthalpie H in Bezug auf die Masse und ist mit kJ/kg als Einheit definiert

Zum Zwecke der kontinuierlichen Absenkung der spezifischen Enthalpie h des Arbeitsfluids weist die Fluidabführeinrichtung 40 in der ersten Dichtungswand 10 eine Mehrzahl von hier jeweils als Bohrung ausgeführten Anzapfpassagen 41 auf, die an einem Ende jeweils mit einer der Kammern 30 der Labyrinthdichtung 1 fluidverbunden sind und die an dem anderen Ende jeweils in eine gemeinsame Abführpassage 42 münden, die ihrerseits einen in die Umgebung mündenden, d h. gegen Umgebungsdruck (atmosphärischen Druck) arbeitenden. Passagenausgang 42a hat.

Mit anderen Worten wird die kontinuierliche Absenkung der spezifischen Enthalpie h durch eine "kontinuierliche" Anzapfung der einzelnen Dichtungsstufen mittels Bohrungen erzielt.

Durch die oben beschriebene Ausgestaltung der Fluidabführeinrichtung 40 ist diese somit eingerichtet, das Arbeitsfluid aus der Labyrinthdichtung 1 gegen Umgebungsdruck abzuführen

An den Passagenausgang 42a ist bevorzugt eine frei in die Umgebung abblasende Absaugung (nicht gezeigt) angeschlossen, so dass das Arbeitsfluid über die Anzapfpassagen 41 und die Abführpassage 42 aus der Labyrinthdichtung 1 abgesaugt werden kann.

Wie aus Fig.2 ersichtlich, ist die Fluidabführeinrichtung 40 eingerichtet, das Arbeitsfluid aus zumindest einem Teil der Kammern 30 abzuführen, um die kontinuierliche Absenkung der spezifischen Enthalpie h des Arbeitsfluids zu bewirken Gemäß der gezeigten Ausführungsform der erfindungsgemäßen Labyrinthdichtung 1 ist die Fluidabführeinrichtung 40 eingerichtet, das Arbeitsfluid entlang der Drosselungsrichtung DR aus jeder zweiten Kammer 30 abzuführen, um die kontinuierliche Absenkung der spezifischen Enthalpie h des Arbeitsfluids zu bewirken, Mit anderen Worten zweigt von jeder zweiten Kammer 30 eine der Anzapfpassagen 41 in die Abführpassage 42 ab.

Es ist ebenfalls im Sinne der Erfindung von beliebiger Stelle der Kammer 30, z. B. der ersten, vierten, sechsten Kammer 30 oder einer anderen Kombination, die Anzapfpassagen 41 abzuzweigen.

In jede der Anzapfpassagen 41 ist bevorzugt an deren Ende eine Blende 41 a eingeschraubt, so dass der Fluiddurchfluss durch die Anzapfpassagen 41 durch die Wahl entsprechender Blendendurchmesser individuell angepasst werden kann. So können z.B. alle Blenden 41a den gleichen Blendendurchmesser, Gruppen von innerhalb einer Gruppe jeweils den gleichen Blendendurchmesser aufweisenden Blenden 41 a unterschiedliche Blendendurchmesser oder z.B. auch alle Blenden 41 a unterschiedliche Blendendurchmesser aufweisen

Demnach ist die Fluidabführeinrichtung 40 eingerichtet, entlang der Drosselungsrichtung DR eine Mehrzahl spezifischer und insbesondere zumindest teilweise unterschiedlicher Massensströme von Arbeitsfluid abzuführen, um die kontinuierliche Absenkung der spezifischen Enthalpie h des Arbeitsfluids zu bewirken.

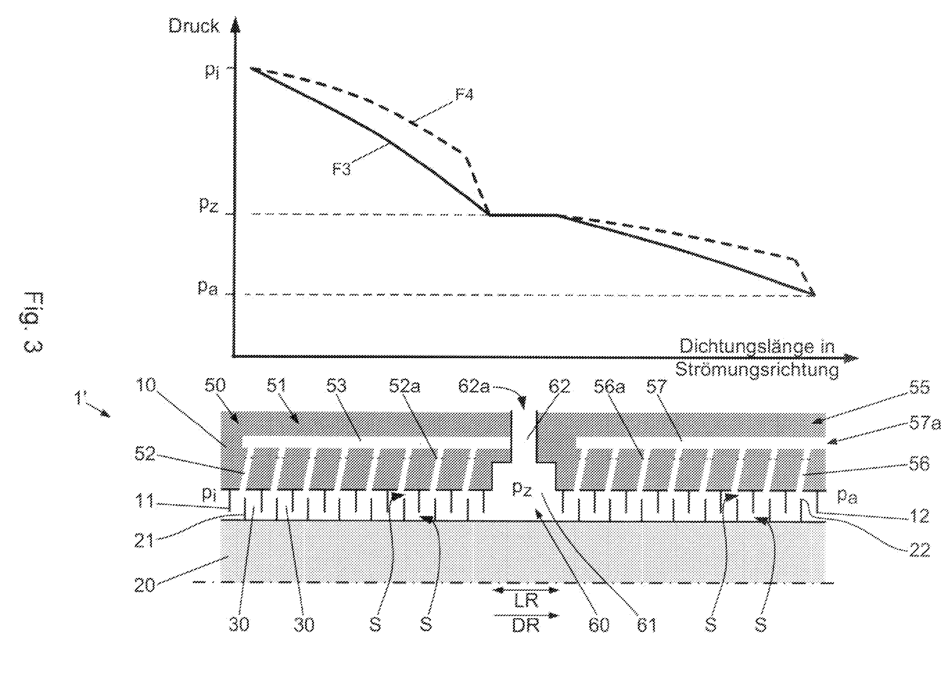

Fig.3 zeigt im oberen Bereich eine Fanno-Kurve F3 einer in Fig.3 im unteren Bereich dargestellten Labyrinthdichtung 1' einer Turbomaschine (nicht vollständig gezeigt) gemäß einer weiteren Ausführungsform der Erfindung. Ferner ist zum Vergleich in Fig.2 im oberen Bereich außerdem gestrichelt eine Fanno-Kurve F4 dargestellt, welche einer nicht gezeigten Labyrinthdichtung mit Zwischenabsaugung gemäß dem Stand der Technik ist

Die Labyrinthdichtung 1' gemäß Fig.3 ist bis auf einige Unterschiede identisch mit der Labyrinthdichtung 1 gemäß Fig 2 ausgebildet. Daher werden im Folgenden nur diese Unterschiede beschrieben, wobei gleiche Bezugszeichen gleiche oder ähnliche Komponenten wie bei der Labyrinthdichtung 1 gemäß Fig.2 bezeichnen

Die Labyrinthdichtung 1' weist eine Zwischenabführeinrichtung 60 sowie eine Fluidabführeinrichtung 50 mit einer ersten Fluidabführeinheit 51 und einer zweiten Fluidabführeinheit 55 auf

Die erste Fluidabführeinheit 51 ist der zweiten Fluidabführeinheit 55 entlang der Drosselungsrichtung DR vorgelagert, wobei die erste Fluidabführeinheit 51 der Zwischenabführeinrichtung 60 entlang der Drosselungsrichtung DR vorgelagert ist.

Die Zwischenabführeinrichtung 60 ist bezogen auf eine Längeder Labyrinthdichtung 1' in etwa mittig zwischen den beiden Fluidabführeinheiten 51, 55 angeordnet und weist eine Zwischenabführkammer 61, die in einem dichtungslamellenfreien Bereich ausgebildet ist, und eine Zwischenabführpassage 62 auf, die an ihrem einen Ende mit der Zwischenabführkammer 61 fluidverbunden ist und die an ihrem anderen Ende einen Zwischenpassagenausgang 62a aufweist der an eine druckgeregelte Absaugeinrichtung (nicht gezeigt) angeschlossen ist

Damit ist die Zwischenabführeinrichtung 60 eingerichtet, das Arbeitsfluid zwischen der ersten Fluidabführeinheit 51 und der zweiten Fluidabführeinheit 55 aus der Labyrinthdichtung 1' abzuführen.

Genauer gesagt ist die Zwischenabführeinrichtung 60 eingerichtet, zwischen der ersten Dichtungslamelle (der in Fig.3 ganz linken Dichtungslamelle 11) und der letzten Dichtungslamelle (der in Fig.3 ganz rechten Dichtungslamelle 11) Arbeitsfluïd aus der Labyrinthdichtung 1' heraus gegen einen vorbestimmten gegenüber dem Umgebungsdruck erhöhten Druck abzuführen.

Dieser erhöhte Druck wird von der druckgeregelte Absaugeinrichtung bereitgestellt und ist ein auf einem gegenüber dem Eingangsdruck $p_a$ der Labyrinthdichtung 1' reduzierten mittleren Druckniveau liegender Zwischendruck $p_z$.

Die erste Fluidabführeinheit 51 der Fluidabführeinrichtung 50 ist eingerichtet, in einem in Fig. 3 linksseitig der Zwischenabführkammer 61 der Zwischenabführeinrichtung 60 befindlichen ersten Längsabschnitt der Labyrinthdichtung 1' das Arbeitsfluid gegen den vorbestimmten gegenüber dem Umgebungsdruck erhöhten Druck (den Zwischendruck $p_z$) aus der Labyrinthdichtung 1' heraus abzuführen, um eine erste kontinuierliche Absenkung der spezifischen Enthalpie h des Arbeitsfluids zu bewirken.

Zu diesem Zweck weist die erste Fluidabführeinheit 51 in der ersten Dichtungswand 10 eine Mehrzahl von hier jeweils als Bohrung ausgeführten ersten Anzapfpassagen 52 auf, die an einem Ende jeweils mit einer der linksseitig der Zwischenabführkammer 61 der Zwischenabführeinrichtung 60 befindlichen Kammern 30 der Labyrinthdichtung 1' fluidverbunden sind und die an dem anderen Ende jeweils in eine gemeinsame erste Abführpassage 53 münden, die ihrerseits in die Zwischenabführpassage 62 mündet

Die zweite Fluidabführeinheit 55 der Fluidabführeinrichtung 50 ist eingerichtet, in einem in Fig.3 rechtsseitig der Zwischenabführkammer 61 der Zwischenabführeinrichtung 60 befindlichen zweiten Längsabschnitt der Labyrinthdichtung 1' das Arbeitsfluid aus der Labyrinthdichtung 1' gegen den Umgebungsdruck abzuführen, um eine zweite kontinuierliche Absenkung der spezifischen Enthalpie h des Arbeitsfluids zu bewirken.

Zu diesem Zweck weist die zweite Fluidabführeinheit 55 in der ersten Dichtungswand 10 eine Mehrzahl von hier jeweils als Bohrung ausgeführten zweiten Anzapfpassagen 56 auf, die an einem Ende jeweils mit einer der rechtsseitig der Zwischenabführkammer 61 der Zwischenabführeinrichtung 60 befindlichen Kammern 30 der Labyrinthdichtung 1' fluidverbunden sind und die an dem anderen Ende jeweils in eine gemeinsame zweite Abführpassage 57 münden, die ihrerseits einen in die Umgebung mündenden, d.h. gegen Umgebungsdruck arbeitenden. Passagenausgang 57a hat.

An den Passagenausang 57a ist bevorzugt eine freiindie Umgebung den Passagenausgang 57a ist bervorzugt eine frei in die umgebungz abblasende Absaugung (nicht gezeigt) angeschlossen, so dass das Arbeitsfluid über die zweiten Anzapfpassagen56 und die zweite Abführpassge 57 aus der Lacyrinihdichtung 1' abgesaugt werden kann.

Wie aus Fig.3 ersichtlich, ist jede Fluidabführeinheit 51, 55 der Fluidabführreinrichtung 50 eingerichtet, das Arbeitsfluid aus zumindest einem Teil der Kammern 30 abzuführen, um die jeweilige kontinuierliche Absenkung der spezifischen Enthalpie h des Arbeitsfluids zu bewirken Gemäß der gezeigten Ausführungsform der erfindungsgemäßen Labyrinthdichtung 1' ist jede Fluidabführeinheit 51, 55 der Fluidabführreinrichtung 50 eingerichtet, das Arbeitsfluid entlang der Drosselungsnchtung DR aus jeder zweiten Kammer 30 abzuführen, um die jeweilige kontinuierliche Absenkung der spezifischen Enthalpie h des Arbeitsfluids zu bewirken. Mit anderen Worten zweigt von jeder zweiten Kammer 30 eine der ersten Anzapfpassagen 52 und der zweiten Anzapfpassagen 56 in die erste Abführpassage 53 bzw, in die zweite Abführpassage 57 ab

In jede der ersten und der zweiten Anzapfpassagen 52, 56 ist bevorzugt an deren Ende eine Blende 52a bzw 56a eingeschraubt, so dass der Fluiddurchfluss durch die Anzapfpassagen 52, 56 durch die Wahl entsprechender Blendendurchmesser individuell angepasst werden kann. So können z.B. alle Blenden 52a. 56a den gleichen Blendendurchmesser, Gruppen von innerhalb einer Gruppe jeweils den gleichen Biendendurchmesser aufessenden Blenden 52a, 56a unterschiedliche Blendendurchmesser oder z.B. auch alle Blenden 52a, 56a unterschiedliche Blendendurshmesser aufweisen

Demnach ist jede Fluidabführeinheit 51, 55 der Fluidabführeinrichtung 50 eingerichtet, entlang der Drosselungsrichtung DR eine Mehrzahl spezifischer und insbesondere zumindest teilweise unterschiedlicher Massenströme von Arbeitsfluid abzuführen, um die jeweilige kontinuierliche Absenkung der spezifischen Enthalpie h des Arbeitsfluids zu bewirken.

Wie aus Fig 3 ersichtlich, weist die zu der erfindungsgemäßen Labyrinthdichtung 1' gehörende Fanno-Kurve F3 gegenüber der zu einer Labyrinthdichtung aus dem Stand der Technik gehörenden gestrichelt dargestellten Fanno-Kurve F4 in den jeweiligen Längsabschnitten einen steileren und außerdem gleichmäßigeren Verlauf ohne Drucksorung bzw. Druckstufung an der jeweils letzten Stufe eines Längsabschnitts der erfindungsgeäßen Labyrinthdichtung 1' auf.

Bezugszeichenliste

1a      Labyrinthdichtung

| | |
|---|---|
| 1 | Labyrinthdichtung |
| 1' | Labyrinthdichtung |
| 10 | Dichtungswand |
| 11 | Dichtungslamelle |
| 12 | freies Ende |
| 20 | Dichtungswand |
| 21 | Dichtungslamelle |
| 22 | freies Ende |
| 30 | Kammer |
| 40 | Fluidabführemrichtung |
| 41 | Anzapfpassage |
| 41a | Blende |
| 42 | Abführpassage |
| 42a | Passagenausgang |
| 50 | Fluidabführeinrichtung |
| 51 | erste Fluidabführeinheit |
| 52 | erste Anzapfpassage |
| 52a | Blende |
| 53 | erste Abführpassage |
| 55 | zweite Fluidabführeinheit |
| 56 | zweite Anzapfpassage |
| 56a | Blende |
| 57 | zweite Abführpassage |
| 57a | Passagenausgang |
| 60 | Zwischenabführeinrichtung |
| 61 | Zwischenabführkammer |
| 62 | Zwischenabführpassage |
| 62a | Zwischenpassagenausgang |
| S | Dichtungspalt |

LR    Längsrichtung

DR    Drosselungsrichtung

Pa    Ausgangsdruck

PI    Eingangsdruck

Pletzte    Druck letzte Stufe

$P_z$    Zwischendruck

F1    Fanno-Kurve (Stand der Technik)

F2    Fanno-Kurve (erste Ausführungsform der Erfindung)

F3    Fanno-Kurve (zweite Ausführungsform der Erfindung)

F4    Fanno-Kurve (Stand der Technik)

H    Enthalpie

h    spezifische Enthalpie

U    innere Energie

pV    Volumenarbeit

**Patentansprüche**

**1.** Labyrinthdichtung (1; 1') für eine Turbomaschine, aufweisend:

eine Mehrzahl von länglichen Dichtungslamellen (11, 21), die entlang einer Längsrichtung (LR) der Labyrinthdichtung (1; 1') längsseits nebeneinander und jeweils mit Abstand voneinander angeordnet sind, so dass zwischen benachbarten Dichtungslamellen (11, 21) jeweils eine Kammer (30) gebildet ist wobei die Dischtungslamellen (11, 21) jeweils ein freies Ende (12, 22) aufweisen, und
wenigstens eine sich in Längsrichtung (LR) der Labyrinthdichtung (1; 1') erstreckende Dichtungswand (10, 20), wobei zwischen jedem freien Ende (12, 22) der Dichtungslamellen (11, 21) und der wenigstens einen Dichtungswand (10, 20) ein Dichtungspalt (S) gebildet ist, über den benachbarte Kammern (30) der zwischen den Dichtungslamellen (11, 21) gebildeten Kammern (30) miteinander fluidverbunden sind, so dass ein der Labyrinthdichtung (1; 1') beaufschlagtes Arbeitsfluid der Turbomaschine in einer Drosselungsrichtung (DR) ausgehend von einer ersten Dichtungslamelle (11) bis zu einer letzten Dichtungslamelle (11) gedrosselt durch die Labyrinthdichtung (1; 1') hindurchströmen kann.
**dadurch gekennzeichnet, dass** eine Fluidabführeinrichtung (40, 50) vorgesehen ist, die eingerichtet ist, mittels aus der Labyrinthdichtung (1; 1') heraus Abführens von Arbeitsfluid entlang der Drosselungsrichtung (DR) eine kontinuierliche Absenkung einer spezifischen Enthalpie (h) des Arbeitsfluids zu bewirken

**2.** Labyrinthdichtung (1: 1') gemäß Anspruch 1, wobei die Fluidabführeinrichtung (40, 50) eingerichtet ist, das Arbeitsfluid aus zumindest einem Teil der Kammern (30) abzuführen, um die Kontinuierliche Absenkung der spezifischen Enthalpie (h) des Arbeitsfluids zu bewirken.

**3.** Labyrinthdichtung (1; 1') gemäß Anspruch 2, wobei die Fluidabführeinrichtung (40, 50) eingerichtet ist, das Arbeitsfluid entlang der Drosselungsrichtung (DR) aus jeder zweiten Kammer (30) abzuführen, um die (DR) aus jeder zweiten Kammer (30) abzuführen, um die kontinuierliche Absenkung der spezifischen Enthalpie (h) des Arbesitsfluids zu bewirken.

**4.** Labyrinthdichtung (1; 1') gemäß einem der Ansprüche 1 bis 3, wobei die Fluidabführeinrichtung (40 ,50) eingerichtet ist, entlang der Drosselungsrichtung (DR) eine Mehrzahl spezifischer Massenströme von Arbeitsfluid abzurühren, um die kontinuierliche Absenkung der spezifischen Enthalpie (h) des Arbeitsfluids zu bewirken.

5. Labyrinthdichtung (1; 1') gemäß Anspruch 4, wobei die Fluidabführeinrichtung (40, 50) eingerichtet ist, als spezifische Massenströme zumindest teilweise unterschiedliche Massenströme von Arbeitsfluid abzuführen. um die kontinuierliche Absenkung der spezifischen Enthalpie (h) des Arbeitsfluids zu bewirken,

6. Labyrinthdichtung (1) gemäß einem der Ansprüche 1 bis 5, wobei die Fluidabführeinrichtung (40) eingerichtet ist, das Arbeitsfluid aus der Labyrinthdichtung (1) gegen einen Umgebungsdruck abzuführen.

7. Labyrinthdichtung (1') gemäß einem der Ansprüche 1 bis 5, ferner mit einer Zwischenabführeinrichtung (60), die eingerichtet ist zwischen der ersten Dichtungslamelle (11) und der letzten Dichtungslamelle (11) Arbeitsfluid aus der Labyrinthdichtung (1') heraus gegen einen vorbestimmten gegenüber einem Umgebungsdruck erhöhten Druck ($p_z$) abzuführen, wobei die Fluidabführeinrichtung (50) eine erste Fruidabführeinheit (51), die eingerichtet ist, in einem ersten Längsabschnitt der Labyrinthdichtung (1') das Arbeitsfluid gegen den vorbestimmten gegenüber dem Umgebungsdruck erhöhten Druck ($p_z$) aus der Labyrinthdichtung (1') heraus abzuführen, um eine erste kontinuierhche Absenkung der spezifischen Enthalpie (h) des Arbeitsfluids zu bewirken, und eine zweite Fluidabführeinheit (55) aufweist, die eingerichtet ist, in einem zweiten Längsabschnitt der Labyrinthdichtung (1') das Arbeitsfluid aus der Labyrinthdichtung (1') gegen den Umgebungsdruck abzuführen, um eine zweite kontinuierliche Absenkung der spezifischen Enthalpie (h) des Arbeitsfluids zu bewirken.

8. Labyrinthdichtung (1') gemäß Anspruch 7, wobei die erste Fluidabführeinheit (51) entlang der Drosselungsrichtung (DR) der Zwischenabführeinrichtung (60) vorgelagert ist.

9. Labyrinthdichtung (1') gemäß Anspruch 7 oder 8, wobei die erste Fluidabführeinheit (51) entlang der Drosselungsrichtung (DR) der zweiten Fluidabführeinheit (55) vorgelagert ist.

10. Labyrinthdichtung (1') gemäß einem der Ansprüche 7 bis 9. wobei die Zwischenabführeinrichtung (60) eingerichtet ist, das Arbeitsfluid zwischen der ersten Fluidabführeinheit (51) und der zweiten Fluidabführeinheit (55) aus der Labyrinthdichtung (1') abzuführen.

Druck

$p_i$

$P_{letzte}$

$p_a$

F1

Dichtungslänge in Strömungsrichtung

1a

10

11

21

20

$p_i$

30  30

LR

DR

S  S

12

$p_a$

22

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2635918 B1